# EUROPÄISCHE PATENTSCHRIFT

(11) **EP 3 458 313 B1**
(45) Veröffentlichungstag und Bekanntmachung des Hinweises auf die Patenterteilung: **10.06.2020**
(21) Anmeldenummer: 17724019.9
(22) Anmeldetag: 16.05.2017
(51) Int. Cl.: B60R 22/195

(54) **VORRICHTUNG ZUR GURTSTRAFFUNG UND STOSSDÄMPFUNG UND KINDERSITZ MIT EINER SOLCHEN VORRICHTUNG**
BELT TIGHTENING AND SHOCK ABSORBING DEVICE, AND CHILD SEAT COMPRISING A DEVICE OF SAID TYPE
DISPOSITIF DE PRÉTENSIONNEMENT DE CEINTURE DE SÉCURITÉ ET D'AMORTISSEMENT DES CHOCS, ET SIÈGE AUTO POUR ENFANT MUNI D'UN TEL DISPOSITIF

(30) Priorität: 18.05.2016 DE 202016102641 U
(43) Veröffentlichungstag der Anmeldung: 27.03.2019
(73) Patentinhaber: Curt Würstl Vermögensverwaltungs-GmbH & Co. KG, 95032 Hof (DE)
(72) Erfinder: WÜRSTL, Jan-Stefan, 95028 Hof (DE)
(74) Vertreter: Sperschneider, Alexandra
(86) Internationale Anmeldenummer: PCT/EP2017/061750
(87) Internationale Veröffentlichungsnummer: WO 2017/198676

(56) Entgegenhaltungen:
- WO-A1-2014/096894
- DE-A1- 4 023 641
- DE-U1- 20 111 219

## Beschreibung

Es werden eine Vorrichtung zur Gurtstraffung und Stoßdämpfung und ein Kindersitz mit einer solchen Vorrichtung beschrieben. Die Vorrichtung weist mindestens eine Federeinrichtung und eine Auslöseeinheit auf. Die Vorrichtung kann neben der Verwendung bei Kindersitzen auch in Kraftfahrzeugen für Gurtsysteme verwendet werden. Darüber hinaus kann eine Gurtstraffung und Stoßdämpfung bei allen Fahrzeugen verwendet werden, die Gurtsysteme zum Halten von Personen aufweisen.

Aus dem Stand der Technik sind verschiedene Vorrichtungen zur Gurtstraffung, vor allem bei Kindersitzen, bekannt.

Aus DE 40 23 641 A1 ist beispielsweise ein Kindersitz für Kraftfahrzeuge mit die Schultern des Kindes übergreifenden, an der Rückenlehne des Sitzes befestigten Schulter- bzw. Hosenträgergurten zum Zurückhalten des Kindes bei Auffahrunfällen oder dergleichen bekannt, wobei zwischen den oberen Enden der Schultergurte und deren Befestigungspunkten am Sitzgestell oder an der Rückenlehne wenigstens ein Federkraftspeicher angeordnet ist. Bei einem Unfall können die Gurte über den Federkraftspeicher dem Vorschnellen des Oberkörpers des Kindes folgen und damit eine Vorwärtsbewegung progressiv verzögern.

Darüber hinaus sind Gurtkraftbegrenzer für Sicherheitsgurte bekannt, wobei eine Umlenkung des Sicherheitsgurtes bereitgestellt wird.

Beispielsweise beschreibt DE 201 11 219 U1 einen Gurtkraftbegrenzer mit einer Umlenkaufnahme für einen Sicherheitsgurt, bestehend aus mindestens zwei an einer Trägerplatte beabstandet zueinander angeordneten Umlenkbolzen und eine zwischen den beiden Umlenkbolzen zugkraftabhängig vom Sicherheitsgurt veränderbare Spanneinrichtung mit einem Umlenkkopf.

Weiterhin wird mit WO 2014/096894 A1 eine Sicherheitsgurtanordnung für einen gefederten Sitz und ein Fahrzeug, das mit einer solchen Anordnung ausgestattet ist, offenbart. Dabei umfasst die Sicherheitsgurtanordnung einen Sicherheitsgurt mit einem ersten Endabschnitt, der am Sitz an einem ersten unteren Befestigungspunkt befestigt ist, und einem zweiten Endabschnitt, der an einer am Fahrzeugrahmen befestigten Spule montiert ist; ein unteres Ablenkelement, das verschiebbar am Sicherheitsgurt befestigt und mit einem Verriegelungselement ausgestattet ist, das dazu bestimmt ist, in einem zweiten unteren Befestigungspunkt am Sitz lösbar verriegelt zu werden; ein oberes Ablenksystem, das am Sicherheitsgurt zwischen dem unteren Ablenkelement und der Rolle befestigt ist und in dem der Sicherheitsgurt gleiten kann. Das obere Umlenksystem ist auf einem schwenkbaren Arm angeordnet, der am Fahrzeugrahmen montiert ist, um bei vertikaler Bewegung des Sitzes automatisch um eine Schwenkachse relativ zum Fahrzeugrahmen schwenken zu können, um die Länge des Torsoabschnitts des Sicherheitsgurtes zwischen dem oberen Umlenksystem und dem unteren Umlenkelement und der Gurtspannung im Wesentlichen konstant zu halten.

Nachteilig sind bei den aus dem Stand der Technik bekannten Vorrichtungen der komplexe Aufbau und die beschränkte Möglichkeit, eine Gurtstraffung bei einem Unfall und eine Stoßdämpfung bereitzustellen, wobei das Verletzungsrisiko für Personen minimiert ist.

Es ist daher Aufgabe der Erfindung, eine Vorrichtung zur Gurtstraffung und Stoßdämpfung sowie einen Kindersitz mit einer solchen Vorrichtung anzugeben, wobei die Vorrichtung einfach ausgebildet ist und ein verbessertes Halten bei einem Unfall ermöglicht. Zudem ist es Aufgabe eine alternative Lösung zur Gurtstraffung und Stoßdämpfung anzugeben, welche einfach aufgebaut ist und auch nachträglich eingebaut werden kann.

Die Aufgabe wird durch eine Vorrichtung mit den in Anspruch 1 angegebenen technischen Merkmalen und durch einen Kindersitz mit den in Anspruch 11 angegebenen technischen Merkmalen gelöst. Vorteilhafte Weiterbildungen sind in den Unteransprüchen im Detail angegeben.

Eine Vorrichtung zur Gurtstraffung und Stoßdämpfung für einen Sicherheitsgurt, welche die vorstehend genannte Aufgabe löst, weist mindestens eine Federeinrichtung, die in einer Führung aufgenommen und über eine Koppeleinrichtung mit einem Gurt verbindbar ist, wobei die Führung mindestens eine Führungsöffnung aufweist, über welche die Koppeleinrichtung mit der Federeinrichtung verbunden ist, und eine Auslöseeinheit auf, die mindestens ein Arretierungselement aufweist, welches die Federeinrichtung in einer vorgespannten Stellung hält und beim Überschreiten einer Mindestkraft, die durch einen Unfall auftritt, die Federeinrichtung freigibt, so dass die Koppeleinrichtung entlang der Führungsöffnung aus einer ersten Position in eine zweite Position verbringbar ist, wobei die Koppeleinrichtung gegen die Kraft der Federeinrichtung mindestens abschnittsweise in Richtung der ersten Position bewegbar ist.

Die Vorrichtung weist gegenüber bekannten Vorrichtungen aus dem Stand der Technik den Vorteil auf, dass bei der Verlagerung der Koppeleinrichtung über die Federeinrichtung auch eine Bewegung zurück durchführbar ist, um die durch einen Unfall auf eine Person wirkende Kraft aufgrund der Trägheit der durch den Gurt zu sichernden Person zu absorbieren. Bei bekannten Vorrichtungen aus dem Stand der Technik erfolgt eine Gurtstraffung in der Regel derart, dass an einem Gurt eine Kraft wirkt, die den Gurt spannt. Ein Zurückführen des Gurtes ist dabei nicht vorgesehen. Bei weiteren Vorrichtungen aus dem Stand der Technik kann eine Ausgleichsbewegung durchgeführt werden, wobei hierzu Umlenkeinrichtungen und Federmittel vorgesehen sind, die auch in einem nicht betätigten Zustand, d.h. ohne Freigeben einer Auslöseeinheit, und daher auch bei einer normalen Fahrt, eine Verlagerung des Gurtes zulassen. Bei der hierin beschriebenen Vorrichtung ist das Zurückführen der Koppeleinrichtung erst nach dem Auslösen der Auslöseeinheit möglich. Vor dem Auslösen jedoch nicht, so dass beispielsweise eine Bewegung einer Person, insbesondere eines Kleinkindes, nach vorne in Fahrtrichtung nicht bzw. nur in einem beschränkten Maß möglich ist. Bei einer zu starken Entfernung von der Rückenlehne würde dann im Falle eines Unfalls das Kind schlagartig gegen die Rückenlehne gedrückt werden. Dies kann ebenfalls zu schweren Verletzungen führen. Die hierin beschriebene Vorrichtung verhindert dies jedoch, da im unbetätigten Zustand keine Verlängerung eines Gurtes möglich ist. D.h. dass eine Ausgleichsbewegung durch Spannen der Federeinrichtung erst dann möglich ist, wenn die Koppeleinrichtung verlagert wurde, wozu die Federeinrichtung freigegeben wurde.

Das Arretierungselement kann eine Sollbruchstelle aufweisen. Bei einem Unfall wird die Kraft auf das Arretierungselement durch die Koppeleinrichtung, welche mit einem Gurt verbunden ist, so groß, dass die Koppeleinrichtung oder ein damit verbundenes Teil ein Brechen des Arretierungselementes bewirken. Die Kraft die hierzu aufgebracht werden muss, damit das Arretierungselement bricht, kann durch Form, Größe und Material des Arretierungselementes, des Gegenspielers, welcher gegen das Arretierungselement drück, und die Ausbildung der Sollbruchstelle bestimmt werden.

Wirkt eine durch Auswahl der Materialen und Dimensionierung der Komponenten bestimmbare Kraft auf das Arretierungselement, bricht dieses und es erfolgt damit eine Verlagerung der Koppeleinrichtung.

Auch in weiteren Ausführungsformen ist zum Freigeben der Koppeleinrichtung über die Auslöseeinheit eine bestimmbare Kraft erforderlich, welche durch die oben genannte Auswahl und Dimensionierung festgelegt werden kann. Erst dann erfolgt eine Verlagerung der Koppeleinrichtung. In weiteren Ausführungsformen können zusätzliche Elemente vorgesehen sein, die eine Verlagerung des Arretierungselementes zulassen. Diese müssen dann aus einer Verriegelungsstellung in eine Freigabestellung verbracht werden, wobei die auftretende Kraft beispielsweise über eine Federeinrichtung oder ein anderes Mittel einstellbar ist. In noch weiteren Ausführungsformen kann mindestens ein Element ausgetauscht werden, damit die erforderliche Auslösekraft verändert werden kann. Alternativ oder zusätzlich können Einstellmittel vorgesehen sein, um die erforderliche Auslösekraft zu verändern.

Allgemein gilt, dass die Auslegung der Wirkkräfte abhängig vom jeweiligen Anwendungsfall ist. Insbesondere ist die Auslegung vom zu erwartenden Passagiergewicht sowie des Verzögerungsimpulses (in g) der bei einem Unfall freiwerdenden Beschleunigung abhängig.

Das Arretierungselement kann auch schwenkbeweglich gelagert sein und über ein Arretierungsmittel in einer Blockier-Position gehalten werden, in welcher die Federeinrichtung in der ersten Stellung vorgespannt ist. Das Arretierungselement kann beispielsweise durch mindestens einen Hebel oder durch eine Platte gebildet werden, die an einem entsprechenden Gegenspieler der Koppeleinrichtung anliegt. Über mindestens ein Arretierungsmittel, beispielsweise einen Stift, der in eine entsprechende Öffnung in dem Arretierungselement greift, wird die Position (Blockier-Position) beibehalten. Bei einem Unfall wird das Arretierungsmittel beispielsweise gegen die Kraft einer Feder verlagert und gleitet aus der Öffnung in dem Arretierungselement heraus. Sodann wird das Arretierungselement oder in weiteren Ausführungsformen werden die Arretierungselemente (z.B. Hebel) verschwenkt und die Federeinrichtung kann sich entspannen, wodurch die Koppeleinrichtung aus der ersten Position in eine zweite Position verlagert wird und damit ein Spannen eines damit verbundenen Gurtes bewirkt.

Die Koppeleinrichtung kann ein bewegbares Verstellelement aufweisen, über welches die Koppeleinrichtung mit einem Gurt verbindbar ist. Das Verstellelement kann eine Einstellung der Gurtlänge ermöglichen, so dass die Vorrichtung beispielsweise auch bei Kindersitzen verwendet werden kann, wobei Kinder in verschiedenen Gewichts- und Altersstufen sicher gehalten werden können.

Die Vorrichtung kann in weiteren Ausführungsformen ein optisches Anzeigemittel aufweisen, welches anzeigt, ob die Federeinrichtung sich in einer vorgespannten Stellung oder einer gespannten Stellung befindet. Dies kann einfach realisiert werden, indem beispielsweise die Koppeleinrichtung einen Bereich mit einer roten und einer grünen Fläche aufweist.

Dazu kann ein Gehäuse der Vorrichtungen zwei Öffnungen aufweisen, wobei in der ersten Position der Koppeleinrichtung der grüne Bereich aus einer Öffnung am Gehäuse sichtbar ist und in einer zweiten Position der rote Bereich über eine weitere Öffnung sichtbar ist. In weiteren Ausführungsformen können auch elektronische oder elektrische Einrichtungen vorgesehen sein. Beispielsweise kann auch eine mechanische Anzeige realisiert werden, wobei die Koppeleinrichtung mit einer Anzeigeeinheit verbunden ist, die in Abhängigkeit der Position der Koppeleinrichtung verdreht wird, wobei entweder ein roter Bereich oder ein grüner Bereich über eine Öffnung in einem Gehäuse der Vorrichtung sichtbar sind.

Die Koppeleinrichtung kann ein Plattenelement aufweisen, das an einer Seite mit der Federeinrichtung verbunden ist. Die Platteneinrichtung liegt in einer Ausführungsform beispielsweise an einem parallel sich innerhalb der Führung erstreckendem Arretierungselement an. Das Arretierungselement kann in einer solchen Ausführungsform drehbar in einem Gehäuse der Vorrichtung gelagert sein. Bei einem plattenförmigen Element können beispielsweise auch zwei Arretierungselemente vorgesehen sein, die miteinander gekoppelt sein können. Hierbei kann auch nur ein Arretierungsmittel vorgesehen sein, dessen Verlagerung ein Auslösen und damit ein Verschwenken beider Arretierungselemente zum Verschieben der Koppeleinrichtung innerhalb der Führung zulässt. In einer weiteren Ausführungsform weisen die Arretierungselemente jeweils ein separates Arretierungsmittel auf, so dass nur bei einer Verlagerung beider Arretierungsmittel eine Verlagerung der Koppeleinrichtung über die Federeinrichtung möglich ist.

Die Federeinrichtung kann eine hydraulische Einrichtung, eine pneumatische Einrichtung, ein deformierbares Material mit entsprechender Rücksprungkraft oder eine Feder aufweisen. Eine Feder ermöglicht einen einfachen und kostengünstigen Aufbau der Vorrichtung.

Das Arretierungsmittel kann in einer weiteren Ausführungsform mit einer Masse gekoppelt sein, welche durch einen Unfall aus einer Ruhestellung, in welcher sich das Arretierungsmittel in der Blockier-Position befindet, bewegbar ist. Die Masse kann beispielsweise durch einen Kindersitz, eine Person oder ein anderes Element gebildet sein. Beispielsweise kann auch in einem Kindersitz eine Masse gelagert sein, die bei einem Unfall aus einer Ruhestellung auf Grund der Trägheit der Masse verlagert wird. Die Masse kann beispielsweise zusätzlich über eine separate Federeinrichtung gedämpft werden. Die Kopplung mit der Masse kann auch über die Kopplung mit einem Gurt erfolgen, wobei die Verlagerung einer Person und damit ein Ziehen an dem Gurt nach Überschreiten einer bestimmbaren Kraftschwelle das Arretierungsmittel bewegt.

Die Vorrichtung kann in weiteren Ausführungsformen mindestens einen Beschleunigungssensor aufweisen, der mit dem Arretierungsmittel gekoppelt ist und mittels welchem ein Auslösen des Arretierungsmittels durchführbar ist. Das Arretierungsmittel kann hierbei elektromechanisch ausgelöst werden.

Die Vorrichtung kann in weiteren Ausführungsformen eine Rückstelleinrichtung aufweisen, wobei die Rückstelleinrichtung zur Überführung der Koppeleinrichtung in die erste Position ausgebildet und mit der Federeinrichtung und/oder der Auslöseeinheit gekoppelt ist. Die Rückstelleinrichtung kann beispielweise durch einen Hebel gebildet werden. Wird der Hebel zurückgezogen, um die Koppeleinrichtung in die erste Position zu verbringen, kann durch die Kopplung mit der Auslöseeinheit beispielsweise das Arretierungselement wieder verschwenkt und das Arretierungsmittel in die Öffnung in dem Arretierungselement gebracht werden.

Die vorstehend genannte Aufgabe wird auch durch einen Kindersitz mit einer Sitzfläche, einer Rückenlehne und einem Gurtsystem mit einem Zentralgurt und damit in Verbindung stehenden Gurten sowie einer Vorrichtung der vorstehend beschriebenen Varianten gelöst, wobei die Koppeleinrichtung mit einem Zentralgurt eines Kindersitzes verbunden und so angeordnet ist, dass bei einer Verlagerung der Koppeleinrichtung aus der ersten Position in die zweite Position die Gurte des Gurtsystems des Kindersitzes gespannt werden, wobei ein Zug auf die Gurte im Bereich der Schultern ausgeübt wird.

Zusätzlich ist es dabei möglich, dass bei einem Druck auf das Gurtsystem während oder nach dem Auslösen durch die Auslöseeinheit eine geringe Bewegung nach vorne zur Kompensation der Unfallenergie durch das Kind möglich ist. Hierzu kann die Federeinrichtung komprimiert und aus der zweiten Position in Richtung zu der ersten Position der Koppeleinrichtung verlagert werden.

Weitere Vorteile, Merkmale und Ausgestaltungsmöglichkeiten ergeben sich aus der nachstehenden Figurenbeschreibung von nicht einschränkend zu verstehenden Ausführungsbeispielen.

In den Zeichnungen zeigt:
- Fig. 1: eine schematische Schnittdarstellung einer Vorrichtung zur Gurtstraffung und Stoßdämpfung in einer Ausgangsstellung;
- Fig. 2: eine schematische Schnittdarstellung der Vorrichtung in Fig. 1 in einer Auslösephase;
- Fig. 3: eine schematische Schnittdarstellung der Vorrichtung von Fig. 1 in einer ausgefahrenen Stellung;
- Fig. 4: eine schematische Schnittdarstellung der Vorrichtung von Fig. 1 in einer Dämpfungsphase; und
- Fig. 5: eine schematische Schnittdarstellung der Vorrichtung von Fig. 1 in einer Stellung nach einem Unfall.

In den Figuren mit gleichen Bezugszeichen versehene Teile entsprechen im Wesentlichen einander, sofern nichts anderes angegeben ist. Darüber hinaus wird darauf verzichtet Bestandteile zu beschreiben, welche nicht wesentlich für die hierin offenbarte technische Lehre sind.

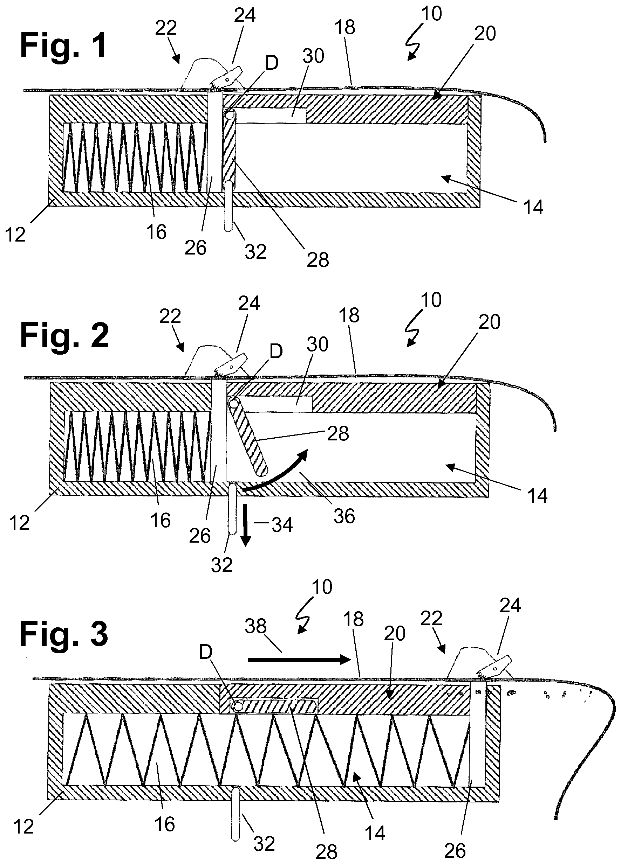

Fig. 1 bis 5 zeigen eine exemplarische Ausführungsform einer Vorrichtung 10, die beispielsweise in einem Kindersitz oder bei einem Gurtsystem eines Fahrzeugs vorgesehen sein kann.

Fig. 1 zeigt eine schematische Schnittdarstellung einer Vorrichtung 10 zur Gurtstraffung und Stoßdämpfung in einer Ausgangsstellung.

Die Vorrichtung 10 weist ein Gehäuse 12 auf, das eine Führung 14 umgibt. Innerhalb des Gehäuses 12 ist eine Feder 16 angeordnet. Die Feder 16 stützt sich an einem Ende innerhalb der Führung 14 an dem Gehäuse 12 und an dem gegenüberliegenden Ende an einem Plattenelement 26 ab. Das Plattenelement 26 ist Teil einer Koppeleinrichtung 22. Die Koppeleinrichtung 22 weist ein Verstellelement 24 auf, welches dazu vorgesehen ist einen Gurt 18 zu halten. Um den Gurt 18 an verschiedenen Stellen mit der Koppeleinrichtung 22 zu verbinden, kann das Verstellelement 24 verschwenkt werden. Das Verstellelement 24 weist hierzu an einer Seite Reib- oder Klemmelemente auf, so dass in einer Arretierungsstellung das Verstellelement 24 den Gurt fest in Bezug auf dessen Position zu der Koppeleinrichtung 22 hält.

Das Gehäuse 12 weist weiter eine Führungsöffnung 20 auf. Die Führungsöffnung 20 erstreckt sich von der rechten Seite des Gehäuses 12 bis zum Plattenelement 26. Die Führungsöffnung 20 ist so breit ausgebildet, dass ein Abschnitt des Plattenelementes 26 nach oben herausgeführt ist und mit dem oberen Abschnitt der Koppeleinrichtung 22 verbunden ist. Die Breite bezieht sich dabei auf die Erstreckung der Führungsöffnung orthogonal zur Länge, welche durch den Abstand zwischen der rechten Gehäusewand und dem Plattenelement 26 definiert ist.

Die Vorrichtung 10 weist im Gehäuse 12 zudem mindestens eine Aufnahme 30 auf, in welcher ein Arretierungselement 28 einer Auslöseeinheit aufgenommen werden kann. In weiteren Ausführungsformen weist das Gehäuse 12 zwei Aufnahmen 30 auf, die zu beiden Seiten des oberen Gehäuseteils neben der Führungsöffnung 20 angeordnet sind. In den Aufnahmen 30 bzw. in der Aufnahme 30 ist das Arretierungselement 28 bzw. sind die Arretierungselemente 28 um eine Drehachse D verdrehbar gelagert. Die Arretierungselemente 28 können beispielsweise durch Hebel gebildet werden. In der in Fig. 1 gezeigten Stellung verläuft das Arretierungselement 28 parallel zu dem Plattenelement 26 und ist über einen Arretierungsstift 32 in Position gehalten. Die Feder 16 ist vorgespannt und übt einen Druck auf das Plattenelement 26 aus. Das Plattenelement 26 kann sich auf Grund der Arretierung des Arretierungselementes 28 über den Arretierungsstift 32 nicht bewegen.

Die Vorrichtung 10 kann beispielsweise in einen Kindersitz integriert sein, und eine Gurtstraffung des Gurtes 18 bewirken. Der Gurt 18 kann beispielsweise ein Zentralgurt eines Gurtsystems des Kindersitzes sein. Mit dem Gurt 18 gekoppelte Gurte können demnach einen Zug auf Gurte im Bereich der Schultern oder im Bereich der Sitzfläche ausüben. Die Vorrichtung 10 kann auch nachträglich bei Kindersitzen eingebaut werden. Zusätzlich ist es möglich, die Vorrichtung 10 in einem Fahrzeug, wie bspw. einem Kraftfahrzeug, zur Gurtstraffung und Stoßdämpfung vorzusehen.

Die Dimensionierung der Feder 16 sowie die Abmaße der Vorrichtung 10, insbesondere der Führung 14 und der Führungsöffnung 20, hängen von dem jeweiligen Gewicht der zu schützenden Person und der Aufprallenergie bei einem Unfall ab, bei welcher die Vorrichtung 10 auslösen soll. Entsprechend ist auch der Arretierungsstift 32 derart verlagerbar in dem Gehäuse 12 gelagert, dass dieser in Abhängigkeit einer festlegbaren Auslösekraft nach unten in Richtung des Pfeils 34 (siehe Fig. 2) bewegt wird. Hierzu kann der Arretierungsstift 32 mit einer Masse gekoppelt sein. Als Masse kommt hierbei beispielsweise ein Masseelement in Betracht, welches auf Grund der Trägheit bei einem Unfall innerhalb eines Kindersitzes oder innerhalb einer weiteren Aufnahme der Vorrichtung 10 (in den Figuren nicht dargestellt) verlagerbar ist. Die Masse kann über ein Federsystem erst dann eine Bewegung und damit ein Freigeben des Arretierungsstiftes 32 bewirken, wenn eine bestimmte Kraft auftritt oder die Aufprallenergie bei einem Unfall eine bestimmte Energiemenge überschreitet.

Der Arretierungsstift 32 kann auch durch einen Zug auf den Gurt 18 ausgelöst werden, wobei hierzu beispielsweise der Arretierungsstift 32 gegen ein Widerlager gedrückt wird. Bei einem Unfall kann beispielsweise durch die Trägheit einer Person der Gurt 18 gestrafft werden und damit der Arretierungsstift 32 aus der Arretier-Position in die FreigabePosition überführt werden. Anschließend wird der Gurt 18 gespannt.

In weiteren Ausführungsformen kann der Arretierungsstift 32 auch durch die Relativbewegung bei einem Unfall durch die Masse des Sitzes eine Verlagerung in Richtung des Pfeils 34 (siehe Fig. 2) erfahren, so dass das Arretierungselement 28 verschwenkt werden kann.

Der maximale Verschiebeweg der Koppeleinrichtung 22 wird durch die Länge der Führungsöffnung 20 definiert. Die Länge der Führungsöffnung 20 liegt bei einem Kindersitz beispielsweise in einem Bereich zwischen 10 mm und 50 mm. Der Verschiebeweg des Arretierungsstiftes 32 kann in weiteren Ausführungsformen in einem Bereich zwischen 5 mm und 15 mm liegen.

Fig. 2 zeigt eine schematische Schnittdarstellung der Vorrichtung 10 in einer Auslösephase. Bei einem Unfall wird der Arretierungsstift 32 in Richtung des Pfeils 34 aus der Position innerhalb der Führung 14 herausbewegt. Hierzu ist der Arretierungsstift 32 beispielsweise mit dem Gurt 18, einem trägen Masseelement, einer Person oder einem Kindersitz zum Auslösen des Arretierungsstiftes 32 gekoppelt. Nach dem Herausziehen des Führungsstiftes 32 aus einer entsprechenden Aufnahmeöffnung in dem Arretierungselement 28 wird dieses nach oben in Richtung des Pfeils 36 verschwenkt. Dies erfolgt auf Grund des Drucks der Feder 16, welche das Plattenelement 26 gegen das Arretierungselement 28 drückt. Da das Arretierungselement 28 nicht mehr über den Arretierungsstift 32 gehalten wird, verschwenkt dieses um die Drehachse D. Zusätzlich kann im Bereich der Drehachse D eine Feder, wie bspw. eine Rollfeder, vorgesehen sein, die die Bewegung in Richtung des Pfeils 36 unterstützt. Über eine Feder wird zusätzlich verhindert, dass das Arretierungselement 28 wieder zurück verschwenkt wird und die Feder 16 und/oder die Koppeleinrichtung 22 blockiert.

Fig. 3 zeigt eine schematische Schnittdarstellung der Vorrichtung 10 in einer ausgefahrenen Stellung. Nach dem Freigeben der Führung 14 wird über die Feder 16 das Plattenelement 26 nach rechts verschoben. Die damit gekoppelte Koppeleinrichtung 22 wird in Richtung des Pfeils 38 verschoben, so dass der Gurt 18 gestrafft wird. Hierdurch wird bei einem Unfall das Weiterbewegen einer Person auf Grund der Trägheit in Fahrtrichtung verhindert.

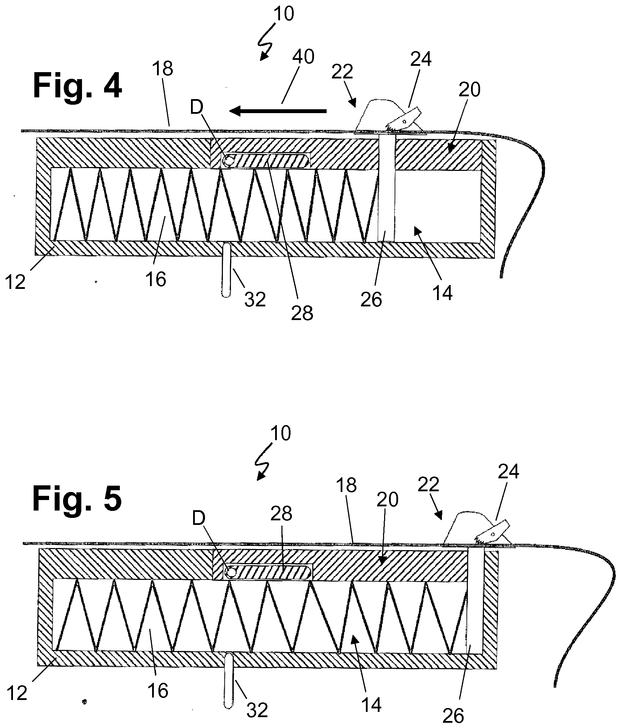

Fig. 4 zeigt eine schematische Schnittdarstellung der Vorrichtung 10 in einer Dämpfungsphase. Damit es nicht zu einem abrupten Abbremsen der über den Gurt 18 gehaltenen Person kommt und ein Teil der beim Unfall frei werdenden Energie absorbiert wird, kann die Koppeleinrichtung 22 in Richtung des Pfeils 40 gegen die Kraft der Feder 16 zurückgeführt werden. Vorteilhafterweise bewirkt die Vorrichtung 10 sowohl ein Straffen des Gurtes 18 als auch eine Absorption der beim Unfall frei werdenden Energie.

Wie bereits für das Arretierungselement 28 angegeben, kann eine Federeinrichtung vorgesehen sein, die eine Bewegung des Arretierungselementes 28 in die Aufnahme 30 unterstützt. Über eine solche Federanordnung kann das Arretierungselement 28 auch dann innerhalb der Aufnahme 30 gehalten werden, damit dieses nicht zurück in die Führung 14 verschwenkt und damit eine Bewegung der Koppeleinrichtung 22 verhindert.

Fig. 5 zeigt eine schematische Schnittdarstellung der Vorrichtung 10 von Fig. 1 in einer Stellung nach einem Unfall. Nachdem der Gurt 18 gestrafft und die beim Unfall frei werdende Energie durch eine Verlagerung der Koppeleinrichtung 22 über die Feder 16 kompensiert wurde, wird der Gurt 18 über die Koppeleinrichtung 22 wieder gestrafft und verbleibt in dieser gestrafften Position. Die Position der Koppeleinrichtung 22 kann über eine optische Anzeige sichtbar sein. So kann beispielsweise das Plattenelement 26 an seiner Seite einen roten und einen grünen Bereich aufweisen. Bei der in Fig. 1 gezeigten Stellung ist über eine Öffnung in dem Gehäuse 12 der grüne Bereich sichtbar, so dass eine unbetätigte Stellung der Vorrichtung 10 angezeigt wird. Bei der in Fig. 5 gezeigten Stellung kann der rote Bereich über eine weitere Öffnung an dem Gehäuse 12 der Vorrichtung 10 sichtbar sein. Dies signalisiert, dass die Vorrichtung 10 sich in einem ausgelösten Zustand befindet und daher erst wieder in die ursprüngliche Position verbracht werden muss.

Zum Zurückführen der Koppeleinrichtung 22 und zum Verschwenken des Arretierungselementes 28 kann eine Rückstelleinrichtung vorgesehen sein. Die Rückstelleinrichtung 28 kann auch mit dem Arretierungsstift 32 gekoppelt sein, so dass ein Zurückführen der Koppeleinrichtung 22 über einen bestimmten Punkt hinaus ein Verschwenken des Arretierungselementes 28 in entgegengesetzter Richtung zu dem Pfeil 36 und eine Bewegung des Arretierungsstiftes 32 in entgegengesetzter Richtung zu dem Pfeil 34 erfolgt. Über eine weitere Federanordnung kann nach dem Überfahren eines bestimmten Punktes der Arretierungsstift 32 nach oben gedrückt werden, bis dieser in einer entsprechenden Aufnahme des Arretierungselementes 28 eingreift. Die Vorrichtung 10 ist dann wieder einsatzfähig. Das Verschwenken des Arretierungselementes 28 und die Verlagerung des Arretierungsstiftes 32 können beim Überfahren eines bestimmten Punktes auftreten.

Dieser Punkt kann insbesondere durch die Position des Plattenelementes 26 in der in Fig. 1 gezeigten Stellung definiert werden. Hierzu können beispielsweise an dem Plattenelement 26 seitlich angeordnete Entriegelungsstifte vorgesehen sein, die eine entsprechende Verlagerung des Arretierungsstiftes 32 und des Arretierungselementes 28 auslösen und/oder freigeben.

### Bezugszeichenliste

- 10: Vorrichtung
- 12: Gehäuse
- 14: Führung
- 16: Feder
- 18: Gurt
- 20: Führungsöffnung
- 22: Koppeleinrichtung
- 24: Verstellelement
- 26: Plattenelement
- 28: Arretierungselement
- 30: Aufnahme
- 32: Arretierungsstift
- 34: Pfeil
- 36: Pfeil
- 38: Pfeil
- 40: Pfeil

- D: Drehachse

## Patentansprüche

1. Vorrichtung zur Gurtstraffung und Stoßdämpfung für einen Sicherheitsgurt, mindestens aufweisend eine Federeinrichtung, die in einer Führung (14) aufgenommen und über eine Koppeleinrichtung (22) mit einem Gurt (18) verbindbar ist, wobei die Führung (14) mindestens eine Führungsöffnung (20) aufweist, über welche die Koppeleinrichtung (22) mit der Federeinrichtung verbunden ist, und eine Auslöseeinheit, die mindestens ein Arretierungselement (28) aufweist, welches die Federeinrichtung in einer vorgespannten Stellung hält und bei Überschreiten einer Mindestkraft, die durch einen Unfall auftritt, die Federeinrichtung freigibt, so dass die Koppeleinrichtung (22) entlang der Führungsöffnung (20) aus einer ersten Position in eine zweite Position verbringbar ist, wobei die Koppeleinrichtung (22) gegen die Kraft der Federeinrichtung mindestens abschnittsweise in Richtung der ersten Position bewegbar ist.

2. Vorrichtung nach Anspruch 1, wobei das Arretierungselement eine Sollbruchstelle aufweist.

3. Vorrichtung nach Anspruch 1, wobei das Arretierungselement (28) schwenkbeweglich an der Führung (14) gelagert und über ein Arretierungsmittel in einer Blockier-Position gehalten wird, in der die Federeinrichtung in der ersten Stellung vorgespannt ist.

4. Vorrichtung nach einem der Ansprüche 1 bis 3, wobei die Koppeleinrichtung (22) ein bewegbares Verstellelement (24) aufweist, über welches die Koppeleinrichtung (22) mit einem Gurt (18) verbindbar ist.

5. Vorrichtung nach einem der Ansprüche 1 bis 4, aufweisend ein optisches Anzeigemittel, welches anzeigt, ob die Federeinrichtung sich in einer vorgespannten Stellung oder einer entspannten Stellung befindet.

6. Vorrichtung nach einem der Ansprüche 1 bis 5, wobei die Koppeleinrichtung (22) ein Plattenelement (26) aufweist, das an einer Seite mit der Federeinrichtung verbunden ist.

7. Vorrichtung nach einem der Ansprüche 1 bis 6, wobei die Federeinrichtung eine hydraulische Einrichtung, ein deformierbares Material mit Rücksprungkraft, eine pneumatische Einrichtung oder eine Feder (16) aufweist.

8. Vorrichtung nach einem der Ansprüche 3 bis 7, wobei das Arretierungsmittel mit einer Masse gekoppelt ist, welche durch einen Unfall aus einer Ruhestellung, in welcher sich das Arretierungsmittel in der Blockier-Position befindet, bewegbar ist.

9. Vorrichtung nach einem der Ansprüche 3 bis 7, aufweisend mindestens einen Beschleunigungssensor, der mit dem Arretierungsmittel gekoppelt ist und mittels welchem ein Auslösen des Arretierungsmittels durchführbar ist.

10. Vorrichtung nach einem der Ansprüche 1 bis 9, aufweisend eine Rückstelleinrichtung, wobei die Rückstelleinrichtung zur Überführung der Koppeleinrichtung in die erste Position ausgebildet und mit der Federeinrichtung und/oder der Auslöseeinheit gekoppelt ist.

11. Kindersitz mit einer Sitzfläche, einer Rückenlehne und einem Gurtsystem mit einem Zentralgurt und damit in Verbindung stehenden Gurten und einer Vorrichtung (10) nach einem der Ansprüche 1 bis 10, wobei die Koppeleinrichtung (22) mit einem Zentralgurt eines Kindersitzes verbunden und so angeordnet ist, dass bei einer Verlagerung der Koppeleinrichtung (22) aus der ersten Position in die zweite Position die Gurte des Gurtsystems des Kindersitzes gespannt werden, wobei ein Zug auf die Gurte im Bereich der Schultern ausgeübt wird.

## Claims

1. Device for belt-tightening and shock absorption for a safety belt, comprising at least one spring device, which is received in a guide (14) and is connectible by way of a coupling device (22) with a belt (18), wherein the guide (14) has at least one guide opening (20) by way of which the coupling device (22) is connected with the spring device, and a trigger unit comprising at least one locking element (28) which holds the spring device in a biased setting and frees the spring device if a minimum force arising due to an accident is exceeded, so that the coupling device (22) can be brought along the guide opening (20) from a first position to a second position, wherein the coupling device (22) is movable against the force of the spring device at least in a section in the direction of the first position.

2. Device according to claim 1, wherein the locking element has a frangible location.

3. Device according to claim 1, wherein the locking element (28) is mounted on the guide (14) to be pivotably movable and is held by way of locking means in a blocking position in which the spring device is biased into the first setting.

4. Device according to any one of claims 1 to 3, wherein the coupling element (22) comprises a movable adjusting element (24) by way of which the coupling device (22) is connectible with a belt (18).

5. Device according to any one of claims 1 to 4, comprising optical indicating means which indicates whether the spring device is in a biased setting or a relaxed setting.

6. Device according to any one of claims 1 to 5, wherein the coupling device (22) comprises a plate element (26) which is connected at one side with the spring device.

7. Device according to any one of claims 1 to 6, wherein the spring device comprises a hydraulic device, a deformable material with a restoring force, a pneumatic device or a spring (16).

8. Device according to any one of claims 3 to 7, wherein the locking means is coupled with a mass which is movable through an accident out of a rest setting in which the locking means is disposed in the blocking position.

9. Device according to any one of claims 3 to 7, comprising at least one acceleration sensor which is coupled with the locking means and by means of which triggering of the locking means can be carried out.

10. Device according to any one of claims 1 to 9, comprising a resetting device, wherein the resetting device is constructed for transferring the coupling device to the first position and is coupled with the spring device and/or the trigger unit.

11. Child seat with a seating surface, a backrest and a belt system with a central belt and belts connected therewith and a device (10) according to any one of claims 1 to 10, wherein the coupling device (22) is connected with a central belt of a child seat and is so arranged that in the event of displacement of the coupling device (22) from the first position to the second position the belts of the belt system of the child seat are tightened, wherein a tension is exerted on the belts in the region of the shoulders.

## Revendications

1. Dispositif de prétensionnement de ceinture et d'amortissement des chocs pour une ceinture de sécurité, présentant au moins un dispositif à ressort, qui est logé dans un guidage (14) et peut être relié à une ceinture (18) par l'intermédiaire d'un dispositif d'accouplement (22), dans lequel le guidage (14) présente au moins une ouverture de guidage (20), par l'intermédiaire de laquelle le dispositif d'accouplement (22) est relié au dispositif à ressort, et une unité de déclenchement, qui présente au moins un élément d'arrêt (28), lequel maintient le dispositif à ressort dans une position précontrainte et, lorsqu'une force minimale, qui se produit en raison d'un accident, est dépassée, libère le dispositif à ressort, de sorte que le dispositif d'accouplement (22) peut être amené le long de l'ouverture de guidage (20) d'une première position dans une deuxième position, dans lequel le dispositif d'accouplement (22) peut être déplacé au moins en partie en direction de la première position à l'encontre de la force du dispositif à ressort.

2. Dispositif selon la revendication 1, dans lequel l'élément d'arrêt présente un point de rupture.

3. Dispositif selon la revendication 1, dans lequel l'élément d'arrêt (28) est monté de manière pivotante sur le guidage (14) et retenu par l'intermédiaire d'un moyen d'arrêt dans une position de blocage, dans laquelle le dispositif à ressort est précontraint dans la première position.

4. Dispositif selon l'une quelconque des revendications 1 à 3, dans lequel le dispositif d'accouplement (22) présente un élément de réglage (24) mobile, par l'intermédiaire duquel le dispositif d'accouplement (22) peut être relié à une ceinture (18).

5. Dispositif selon l'une quelconque des revendications 1 à 4, présentant un moyen d'indication optique, lequel indique si le dispositif à ressort se trouve dans une position précontrainte ou une position détendue.

6. Dispositif selon l'une quelconque des revendications 1 à 5, dans lequel le dispositif d'accouplement (22) présente un élément plaque (26), qui est relié au dispositif à ressort sur une face.

7. Dispositif selon l'une quelconque des revendications 1 à 6, dans lequel le dispositif à ressort présente un dispositif hydraulique, un matériau déformable à force de retrait, un dispositif pneumatique ou un ressort (16).

8. Dispositif selon l'une quelconque des revendications 3 à 7, dans lequel le moyen d'arrêt est accouplé à une masse, laquelle peut être déplacée en raison d'un accident à partir d'une position de repos, dans laquelle le moyen d'arrêt se trouve dans la position de blocage.

9. Dispositif selon l'une quelconque des revendications 3 à 7, présentant au moins un capteur d'accélération, qui est couplé au moyen d'arrêt et au moyen duquel un déclenchement du moyen d'arrêt peut être effectué.

10. Dispositif selon l'une quelconque des revendications 1 à 9, présentant un dispositif de rappel, dans lequel le dispositif de rappel est réalisé pour amener le dispositif d'accouplement dans la première position et est accouplé au dispositif à ressort et/ou à l'unité de déclenchement.

11. Siège auto pour enfant avec une assise, un dossier et un système de ceinture avec une ceinture centrale et des ceintures reliées à celle-ci et un dispositif (10) selon l'une quelconque des revendications 1 à 10, dans lequel le dispositif d'accouplement (22) est relié à une ceinture centrale d'un siège auto pour enfant et disposé de sorte que, lors d'un déplacement du dispositif d'accouplement (22) de la première position dans la deuxième position, les ceintures du système de ceinture du siège auto pour enfant sont mises en tension, dans lequel une traction sur les ceintures est exercée dans la zone des épaules.
